# EUROPÄISCHE PATENTSCHRIFT

(11) **EP 3 003 589 B1**
(45) Veröffentlichungstag und Bekanntmachung des Hinweises auf die Patenterteilung: **21.03.2018**
(21) Anmeldenummer: 14726960.9
(22) Anmeldetag: 26.05.2014
(51) Int. Cl.: B21B 28/04

(54) **WALZVORRICHTUNG UND VERFAHREN ZUR KONDITIONIERUNG EINER WALZENOBERFLÄCHE**
ROLLING DEVICE AND METHOD FOR CONDITIONING A ROLL SURFACE
DISPOSITIF DE LAMINAGE ET PROCÉDÉ DE CONDITIONNEMENT DE LA SURFACE D'UN CYLINDRE

(30) Priorität: 27.05.2013 DE 102013105399
(43) Veröffentlichungstag der Anmeldung: 13.04.2016
(73) Patentinhaber: Hydro Aluminium Rolled Products GmbH, 41515 Grevenbroich (DE)
(72) Erfinder: DRAESE, Stephan, 41334 Nettetal (DE); PIESKE, Hartmut, 41517 Grevenbroich (DE); BAUES, Josef, 41517 Grevenbroich (DE); BÖHM, Steffen, 40627 Düsseldorf (DE)
(74) Vertreter: Cohausz & Florack
(86) Internationale Anmeldenummer: PCT/EP2014/060842
(87) Internationale Veröffentlichungsnummer: WO 2014/191357

(56) Entgegenhaltungen:
- EP-A2- 0 154 319
- EP-A2- 0 344 610
- JP-A- S59 101 210

## Beschreibung

Die Erfindung betrifft eine Walzvorrichtung, insbesondere zum Kaltwalzen von Aluminiumbändern, mit einem Walzgerüst umfassend mindestens eine Walze, vorzugsweise mindestens zwei Arbeitswalzen und mindestens zwei Stützwalzen. Die Erfindung betrifft weiterhin ein Verfahren zur Konditionierung einer Walzenoberfläche, insbesondere einer Walze eines Quarto-Kaltwalzwerkes, bevorzugt zur Herstellung von Aluminiumfolien.
Zur Herstellung von Aluminiumblechen und Aluminiumfolien werden in der Regel Quarto-Kaltwalzwerke eingesetzt. Beim Walzvorgang kommt es dabei zur Bildung von Belägen auf den Stütz- und/oder Arbeitswalzen, die eine hohe abrasive Wirkung aufweisen können. Durch diese Beläge wird die Oberflächenstruktur der Walzen recht schnell verschlissen, so dass häufige Walzenwechsel erforderlich sind. Weiterhin neigen die Beläge zur Annahme von Mustern und Streifen, die sich dann auf die gewalzten Bänder bzw. Folien übertragen und so deren Oberflächenbeschaffenheit verschlechtern.

Aus dem nächstkommenden Stand der Technik interner Betriebspraxis sind Verfahren bekannt, bei denen dieses Problem dadurch überwunden wird, dass die Beläge in regelmäßigen Wartungsintervallen von den Walzen entfernt werden. Hierdurch kann zwar die Lebensdauer der Walzen verlängert und die Oberflächenbeschaffenheit der gewalzten Produkte verbessert werden. Gleichzeitig führen die erforderlichen Wartungsintervalle jedoch zu hohen Stillstandszeiten und damit zu Produktionsausfallzeiten.
Außerhalb der Aluminiumindustrie werden bei sehr hohen Anforderungen an die Oberflächengüte der gewalzten Produkte auch besondere Walzenputzsysteme eingesetzt, die jedoch einen hohen konstruktiven Aufwand mit sich bringen und damit sehr teuer sind. Diese Walzenputzsysteme sind auf Quarto-Kaltwalzwerke in der Aluminiumanlagentechnik und auf die bei der Walzung von Aluminiumprodukten entstehenden Beläge nicht anwendbar.

Aus der EP 1 436 103 B1 ist ein Verfahren zur Aufarbeitung von Walzen eines Warmwalzgerüstes bekannt, bei dem die Walzenoberfläche mit einem Flüssigkeitsstrahl unter hohem Druck bearbeitet wird. Abhängig von den eingesetzten Medien zur Bearbeitung der Walzenoberfläche kann es bei diesen Verfahren allerdings zur Bildung explosiver Gemische kommen, so dass besondere Sicherheitsvorkehrungen erforderlich sind, welche die Durchführung des Verfahrens erschweren.

Aus der EP 0 154 319 A2 ist eine Walzenschleifvorrichtung für Walzwerke bekannt, insbesondere eine Walzenschleifvorrichtung, die das Profil benutzter Arbeits- und Stützwalzen von Grobblechwalzwerken und Treibwalzen von Aufwicklern durch Inline-Schleifen nacharbeitet.

Ein weiteres Problem, das sich im Stand der Technik bei der Konditionierung von Walzenoberflächen stellt, ist eine mögliche Verunreinigung der beim Walzen verwendeten Walzöle durch die Konditionierung. Beim Walzen von Aluminiumbändern, insbesondere bei der Herstellung von Aluminiumfolie, werden die Bänder nach dem Walzen in der Regel entfettet, beispielsweise durch thermische Verfahren. Diese Verfahren stellen hohe Anforderungen an die Hygiene des im Walzprozess verwendeten Walzöls, da Verunreinigungen im Walzöl nach der Entfettung auf den Bändern verbleiben oder sogar deren Oberfläche beschädigen können.

Vor diesem Hintergrund liegt der vorliegenden Erfindung die technische Aufgabe zugrunde, eine Walzvorrichtung und ein Verfahren zur Konditionierung einer Walzenoberfläche zur Verfügung zu stellen, mit denen eine Beeinträchtigung des Walzprozesses und des Walzprodukts durch Verschmutzungen, insbesondere durch Belagbildung auf Stütz- bzw. Arbeitswalzen kostengünstig und möglichst walzölverträglich vermieden werden kann.

Diese Aufgabe wird erfindungsgemäß mit einer Walzvorrichtung gemäß Anspruch 1 gelöst.

Die Walzvorrichtung weist ein Walzgerüst umfassend eine Walze, vorzugsweise mindestens zwei Arbeitswalzen und mindestens zwei Stützwalzen, ein Konditionierwerkzeug, mit dem während des Walzbetriebs eine Verschmutzung von der Oberfläche der Walze mechanisch abtragbar ist, und eine angetriebene Transportvorrichtung auf, mit der das Konditionierwerkzeug während des Walzbetriebs im Wesentlichen in Längsrichtung der Walze über die Oberfläche der Walze verfahrbar ist. Bei der abtragbaren Verschmutzung kann es sich insbesondere um einen Belag auf der Oberfläche der Walze handeln.

Bei der Walzvorrichtung kann es sich insbesondere um eine Walzvorrichtung zum Kaltwalzen von Aluminiumbändern handeln, beispielsweise ein Quarto-Kaltwalzwerk zur Herstellung von Aluminiumfolie.

Die Transportvorrichtung kann beispielsweise eine Führungsschiene umfassen sowie einen Antrieb, mit dem das Konditionierwerkzeug entlang der Führungsschiene über die Oberfläche der Walze bewegt werden kann.

Die zuvor genannte Aufgabe wird weiterhin erfindungsgemäß gelöst durch ein Verfahren zur Konditionierung einer Walzenoberfläche nach Anspruch 10, bei dem mit einem Konditionierwerkzeug mechanisch eine Verschmutzung, insbesondere ein Belag, von der Oberfläche einer Walze abgetragen wird, bei dem das Konditionierwerkzeug während des Abtragens der Verschmutzung im Wesentlichen in Längsrichtung über die Oberfläche der Walze bewegt wird und bei dem das Abtragen der Verschmutzung während des Walzbetriebs der Walze erfolgt. Mit diesem Verfahren wird vorzugsweise die Walzenoberfläche einer Walze eines Quarto-Kaltwalzwerkes zur Herstellung von Aluminiumfolie konditioniert. Insbesondere kann mit dem Verfahren auch die Walzenoberfläche einer Walze eines Walzgerüsts einer erfindungsgemäßen Walzvorrichtung konditioniert werden.

Sowohl in Bezug auf die erfindungsgemäße Walzvorrichtung, als auch in Bezug auf das erfindungsgemäße Verfahren wurde erkannt, dass eine effektive und wirtschaftliche Konditionierung der Walzenoberfläche durch die mechanische Entfernung von Verschmutzungen einer Walzenoberfläche, insbesondere eines beim Walzen von Aluminiumprodukten entstehenden Belages, mittels eines im Wesentlichen in Längsrichtung der Walze über die Oberfläche der Walze bewegten Konditionierwerkzeugs während des Walzbetriebs der Walze möglich ist. Dies hat den Vorteil, dass die Walzenoberfläche online, d.h. im laufenden Produktionsprozess gereinigt werden kann, so dass eine Unterbrechung des Produktionsprozesses für die Reinigung nicht mehr erforderlich ist. Durch den verminderten Wartungsaufwand können Stillstandszeiten und damit verbundene Produktionsausfallzeiten erheblich reduziert werden, so dass ein wirtschaftlicherer Betrieb der Walzvorrichtung möglich ist.

Weiterhin zeichnen sich die Walzvorrichtung und das Verfahren dadurch aus, dass die Reinigungsmethode keinen hohen konstruktiven Aufwand erfordert, sondern eine kompakte Bauweise ermöglicht.

Durch die mechanische Entfernung von Verschmutzungen auf der Walze mit der erfindungsgemäßen Walzvorrichtung bzw. mit dem erfindungsgemäßen Verfahren kann die Walzenoberfläche zudem in walzölverträglicher Weise konditioniert werden. Als Walzöle werden in der Regel niedrigviskose, kohlenwasserstoffhaltige Gemische wie Petroleum eingesetzt, die insbesondere der Schmierung und der Kühlung beim Walzen dienen. Um eine Verunreinigung dieser Walzöle zu verhindern, müssen im Walzwerk daher Stoffe und Materialien zur Anwendung kommen, die durch die niedrigviskosen, kohlenwasserstoffhaltige Gemische nicht angegriffen werden und aus denen sich keine Stoffe herauslösen, die sich in den Gemischen wiederfinden und die Entfettung oder Lebensmittelverträglichkeit negativ beeinflussen können. Die Verwendung eines Konditionierwerkzeugs zur mechanischen Entfernung von Verschmutzungen erlaubt den Einsatz solcher Stoffe und Materialien, die zu einer möglichst geringen, vorzugsweise zu einer höchstens verschwindend geringen Verschmutzung der Walzöle führen.

Bei der Walze, die durch das Konditionierwerkzeug gereinigt wird, handelt es sich vorzugsweise um eine Stützwalze, insbesondere um eine Stützwalze eines Kaltwalzwerkes. Es hat sich gezeigt, dass durch die Reinigung der Stützwalzen die auf den Walzen entstehenden Beläge ausreichend entfernt werden können, ohne dass es einer direkten Einwirkung auf die Arbeitswalzen bedarf.

Unter einer Bewegung des Konditionierwerkzeugs im Wesentlichen in Längsrichtung der Walze über die Oberfläche der Walze wird verstanden, dass das Konditionierwerkzeug im Wesentlichen parallel zur Drehachse der Walze über die Oberfläche der Walze bewegt wird. Da die Walze gleichzeitig rotiert, ergibt sich in Bezug auf ein angenommenes mitrotierendes Koordinatensystem auf der Oberfläche der Walze eine überlagerte Bewegung aus der Bewegung des Konditionierwerkzeugs in Längsrichtung der Walze und der Walzendrehung. Bei einer Bewegung des Konditionierwerkzeugs über die Oberfläche der Walze ergibt sich dadurch eine spiralförmige Trajektorie des Konditionierwerkzeugs im mitrotierenden Koordinatensystem auf der Walzenoberfläche.

Unter dem mechanischen Abtragen einer Verschmutzung mit dem Konditionierwerkzeug wird verstanden, dass das Konditionierwerkzeug die Verschmutzung durch mechanischen Kontakt, d.h. durch den Kontakt einer festen Oberfläche des Konditionierwerkzeugs mit der Walzenoberfläche bzw. mit der Verschmutzung, abträgt. Beispielsweise kann die Verschmutzung abgeschabt, abgehobelt, abgeschliffen oder auf sonstige mechanische Weise von der Walzenoberfläche abgetragen werden.

Die nachfolgend beschriebenen bevorzugten Ausführungsformen sind jeweils nicht auf die Walzvorrichtung oder auf das Verfahren beschränkt, sondern gelten gleichermaßen sowohl für die Walzvorrichtung als auch für das Verfahren. Bei verfahrensmäßigen Merkmalen der Ausführungsformen ist insbesondere die Walzvorrichtung bevorzugt zur Durchführung eines entsprechenden Verfahrensschritts eingerichtet.

Gemäß des erfindungsgemäßen Verfahrens oder der erfindungsgemäßen Walzvorrichtung weist das Konditionierwerkzeug einen keilförmigen Bereich mit einer Spanfläche, einer Freifläche und einer Schneidkante zum Abtragen der Verschmutzung von der Oberfläche der Walze auf. Es wurde erkannt dass Verschmutzungen von einer Walzenoberfläche besser mit einer definierten Schneidkante abgetragen werden können als mit einem flächig anliegenden Reibklotz. Insbesondere kann mit der Schneidkante eine hohe und definierte Reinigungswirkung der Walzenoberfläche erreicht werden. Insbesondere kann durch die Schneidkante aufgrund der geringeren Kontaktfläche gegenüber einem flächig anliegenden Reibklotz ein höherer vom Putzstein auf die Walzenoberfläche ausgeübter Druck eingestellt werden.
Die Spanfläche bezeichnet die der Relativbewegung zwischen Konditionierwerkzeug und Walzenoberfläche durch die Walzenrotation zugewandte Seite, während die Freifläche die dieser Relativbewegung abgewandte Seite des keilförmigen Bereichs bezeichnet.
Ein effektiver Abtrag der Verschmutzung wird dadurch gewährleistet, dass die Schneidkante im Wesentlichen in Längsrichtung der Walze verläuft mit einer Abweichung von der Längsrichtung bis maximal 20°, bevorzugt bis maximal 10°. Die Relativbewegung zwischen der Schneidkante und der Walzenoberfläche ergibt sich zum größten Teil aus der Walzenrotation. Durch die Anordnung der Schneidkante im Wesentlichen in Längsrichtung der Walze wird damit eine Anordnung der Schneide im Wesentlichen quer zur Relativbewegung und damit eine effektiver Abtrag der Verschmutzung von der Walzenoberfläche erreicht

In der erfindungsgemäßen Walzvorrichtung bzw. dem erfindungsgemäßen Verfahren ist der Spanwinkel zwischen der Spanfläche und der durch die Schneidkante senkrecht zur Walzenoberfläche verlaufenden Ebene negativ. Die durch die Schneidkante senkrecht zur Walzenoberfläche verlaufende Ebene ist fiktiv und dient der Definition des Spanwinkels. Der senkrechte Verlauf zur Walzenoberfläche ist relativ auf die lokale Tangentialebene der Walzenoberfläche durch die jeweils aktuelle Lage der Schneidkante bezogen. Bei einem negativen Spanwinkel verläuft die Spanfläche ausgehend von der Schneidkante in Schnittrichtung (ersichtlich bei Projektion der Spanfläche auf die lokale Tangentialebene der Walzenoberfläche durch die Schneidkante). Bei Drehung der Walze gegenüber der Schneidkante ist die Schnittrichtung der Walzendrehrichtung entgegengesetzt. Durch den negativen Spanwinkel wird erreicht, dass die von der Walzenoberfläche abgetragenen Verschmutzungen sich nicht im Bereich des Konditionierwerkzeugs ansammeln bzw. dort lange Späne bilden, durch welche die Walzenoberfläche wieder verunreinigt oder sogar beschädigt werden könnte. Erfindungsgemäß ist der Spanwinkel im Bereich von -5° bis -40°, bevorzugt -10° bis -40°, insbesondere -15° bis -35°. In einer weiteren Ausführungsform der Walzvorrichtung bzw. des Verfahrens wird als Konditionierwerkzeug ein Putzstein verwendet. Ein solcher Putzstein weist bevorzugt in eine Matrix eingelagerte Partikel auf. Die in der Matrix eingelagerten Partikel bewirken eine gute abrasive Wirkung des Putzsteins auf der Walzenoberfläche und damit eine effektive Entfernung eines Belags auf der Walzenoberfläche. Versuche haben ergeben, dass eine besonders gute Reinigungswirkung erreicht wird, wenn der in die Matrix des Putzsteins Aluminiumoxidpartikel, beispielsweise Korundpartikel, eingebettet sind.
Die Matrix des Putzsteins besteht bevorzugt im Wesentlichen aus walzölverträglichen Werkstoffen, d.h. aus Werkstoffen, die insbesondere gegenüber niederviskosen, kohlenwasserstoffhaltigen Gemischen wie Petroleum bzw. Kerosin beständig sind. Dadurch kann eine Verunreinigung der Walzöle durch den Putzstein verhindert werden.

Vorzugsweise basiert die Matrix des Putzsteins auf einer Mischung aus Fasern, insbesondere einem synthetischen Faservlies, und Harz, insbesondere einem Aminoharz. Die in der Matrix eingelagerten Partikel, d.h. beispielsweise die Aluminiumoxidpartikel, können durch das Harz gebunden sein.

Die eingelagerten Partikel, insbesondere die eingelagerten Aluminiumoxidpartikel, weisen vorzugsweise eine Korngrößenverteilung mit einem kumulativen Anteil im Bereich 50 - 800 µm von mindestens 85 %, bevorzugt mindestens 90 %, weiter bevorzugt mindestens 95 %, insbesondere mindestens 99 %, am Gesamtgewicht der eingelagerten Partikel auf. Hierunter wird verstanden, dass mindestens 85, 90, 95 bzw. 99 Gew.-% der eingelagerten Partikel eine Größe im Bereich 50 - 800 µm aufweisen. Weiter bevorzugt liegt der Median der Korngrößenverteilung im Bereich von 150 bis 250 µm. Mit solchen Korngrößenverteilungen wurden gute Reinigungswirkungen ohne nachteilige Texturbildung auf der Walzenoberfläche erzielt.

Der Putzstein weist bevorzugt eine hohe Porosität mit einem Porenflächenanteil im Bereich von 70 - 90 % auf. Der Porenflächenanteil des Putzsteins wird anhand einer Schnittfläche von mindestens 2,5 mm x 2,5 mm parallel zur Oberfläche des Putzsteins, beispielsweise 50 µm unterhalb der Oberfläche, bestimmt. Der Porenflächenanteil entspricht hierbei dem Anteil der Schnittfläche, der auf die Poren entfällt. Der übrige Teil der Schnittfläche entfällt entsprechend auf die Fasern, das Harz und die eingelagerten Partikel, d.h. vorliegend bevorzugt die übrigen 30 - 10 % des Flächenanteils.

Von der Porosität des Putzsteins entfallen vorzugsweise mindestens 50 %, weiter bevorzugt 70 %, insbesondere 80 % auf die offene Porosität, so dass der entsprechende Teil der Poren offen und so untereinander verbunden sind.

Durch eine hohe Porosität des Putzsteins kann eine gute Ölzirkulation und dadurch eine gute Kühlung des Putzsteins erreicht werden. Weiterhin führt eine hohe Porosität zu einer vorteilhaft großen Aufnahmefähigkeit für die von der Walze abgetragenen Verschmutzungen.

Die Dichte des Putzsteins beträgt vorzugsweise 700 - 850 kg/m³. Eine solche geringe Dichte kann insbesondere durch eine hohe Porosität erreicht werden.

Eine wirksame Reinigung der Walzenoberfläche wird insbesondere dann erreicht, wenn der Putzstein folgende mechanischen Eigenschaften aufweist: mₑ im Bereich von 125 bis 175 MPa und/oder R_{d}(50%) im Bereich von 50 bis 70 MPa. Unter mₑ wird die Steigung der quasielastischen Geraden entsprechend DIN 6892-1:2009 und unter R_{d}(50%) die Druckspannung bei einer Stauchung von 50% verstanden.

Die Größen mₑ und R_{d}(50%) sind für den Putzstein durch einen Druckversuch in Anlehnung an DIN 50134:2008-10 und ISO 13314:2011 bestimmbar bei einer Stauchungsgeschwindigkeit von 10⁻² s⁻¹ und mit einer quaderförmigen Probe mit einem Anfangsquerschnitt von 400 mm² (20 mm x 20 mm) und einer Anfangsmesslänge L₀ von 25 mm. DIN 50134 definiert die Kenngröße m als Steigung der quasi-elastischen Geraden (anstelle eines Elastizitätsmoduls). Bei dieser Kenngröße handelt es sich um eine strukturabhängige Steifigkeit, deren Bestimmung beim Druckversuch das Durchlaufen einer Hysterese erfordert. Da geeignete Putzsteine, insbesondere mit der zuvor beschriebenen Zusammensetzung, häufig keine derartige Hysterese aufweisen, wird zur Charakterisierung des Putzsteins in Anlehnung an DIN6892-1:2009 die Größe me verwendet.

Bei einer weiteren bevorzugten Ausführungsform der Walzvorrichtung bzw. des Verfahrens ist die Oberfläche des Putzsteins so an die zu konditionierende Walze angepasst, dass die durch den Putzstein auf der Walze erzeugbare Walzenoberflächenstruktur der Oberflächenstruktur, insbesondere der Rauheit, der zu konditionierenden Walze entspricht. Die Oberfläche des Putzsteins kann insbesondere durch die Verteilung, den Anteil und/oder die Größe der in die Matrix des Putzsteins eingelagerten Partikel an die Oberflächenstruktur der zu konditionierenden Walze angepasst werden. Auf diese Weise wird die Oberflächenstruktur der zu konditionierenden Walze, insbesondere deren Rauheit, durch die Konditionierung nicht verschlechtert, sondern kann sogar über einen längeren Zeitraum erhalten werden.

Der Putzstein ist weiterhin bevorzugt aufnahmefähig für die von einer Walze gelösten Stoffe. Bevorzugt ist seine Aufnahmefähigkeit so groß, das der Putzstein aufgenommene Verschmutzungen während eines Reinigungszyklus nicht wieder abgibt. Die Aufnahmefähigkeit des Putzsteins ist vorzugsweise verbunden mit einer guten Spülbarkeit, so dass die aufgenommenen Verschmutzungen bei einer Reinigung des Putzsteins mindestens zu 80 Gew.-%, vorzugsweise mindestens zu 90 Gew.-%, insbesondere im Wesentlichen rückstandslos entfernbar sind. Eine Gute Aufnahmefähigkeit für Verschmutzungen sowie eine gute Spülbarkeit wurden in Versuchen beispielsweise mit Putzsteinen erreicht, deren Matrix auf einer Mischung aus synthetischem Faservlies und Harz basiert.

Der Putzstein kann beispielsweise als im Wesentlichen quaderförmiger oder schneidenförmiger, insbesondere als prismatischer Block mit beispielsweise dreieckiger Grundfläche ausgebildet sein.

In einer weiteren bevorzugten Ausführungsform der Walzvorrichtung bzw. des Verfahrens weist die Schneidkante des Konditionierwerkzeugs eine Länge von 5% bis 50%, bevorzugt 15% bis 40% der Walzballenbreite der Walze auf. Durch eine Schneidkantenlänge von mindestens 5%, bevorzugt mindestens 15%, der Walzballenbreite kann das Konditionierwerkzeug pro Umlauf der Walze auf einen Streifen der Walze einwirken, der groß genug ist, um eine Konditionierung der gesamten Walze in einer akzeptablen Zeitspanne durchzuführen. Durch die Beschränkung der Schneidkantenlänge auf maximal 50% der Walzballenbreite wird erreicht, dass bei der Bewegung des Konditionierungswerkzeugs in Längsrichtung der Walze kein Bereich der Walzenoberfläche dauerhaft durch die Schneidkante bearbeitet wird und so einem übermäßigen Verschleiß unterliegt.

Weiterhin hat sich herausgestellt, dass die Schneidkanten mit den beschriebenen Längen bei den typischen Walzballenbreiten von 1000 bis 2200 mm eine Auflagefläche auf der Walzenoberfläche aufweisen, bei denen ein zur walzenschonenden Schmutzentfernung vorteilhafter Druck gut einstellbar ist.

In einer weiteren bevorzugten Ausführungsform der Walzvorrichtung bzw. des Verfahrens weist die Walzvorrichtung eine hydraulisch angetriebene Transportvorrichtung auf. Durch die Verwendung eines hydraulischen Antriebs anstelle eines beispielsweise elektrischen Antriebs kann die Gefahr von Kurzschlüssen oder Funkenschlägen verringert werden. Dies ist insbesondere wegen der beim Walzen verwendeten Walzöle wichtig, welche in der Regel leicht entzündlich oder bei Verdampfen sogar explosiv sind.

Als Hydraulikflüssigkeit des hydraulischen Antriebs wird vorzugsweise ein beim Walzen verwendetes Walzöl, beispielsweise ein Petroleum wie Kerosin, verwendet. Dadurch kann eine Verunreinigung des Walzöls durch austretende Hydraulikflüssigkeit vermieden werden.

In einer weiteren bevorzugten Ausführungsform der Walzvorrichtung bzw. des Verfahrens weist die Walzvorrichtung eine Überwachungseinrichtung auf, welche zur Überwachung der Bewegung der Transportvorrichtung und/oder des Konditionierwerkzeugs eingerichtet ist. Weiterhin sind die Überwachungseinrichtung und die Transportvorrichtung bevorzugt so eingerichtet, dass das Konditionierwerkzeug im Falle einer Störung der Bewegung der Transportvorrichtung und/oder des Konditionierwerkzeugs von der Oberfläche der Walze wegbewegt wird. Beispielsweise können das Konditionierwerkzeug oder die gesamte Transportvorrichtung verschwenkbar ausgestaltet sein, so dass das Konditionierwerkzeug in einer ersten Verschwenkposition auf die Walzoberfläche wirken kann und in einer zweiten Verschwenkposition von der Walzoberfläche beabstandet ist.

Bei einer Unterbrechung der Bewegung des Konditionierwerkzeugs in Längsrichtung der Walze besteht die Gefahr, dass das Konditionierwerkzeug über längere Zeit auf denselben streifenförmigen Bereich der Walze einwirkt. Dies kann zu einer Beschädigung der Walzenoberfläche führen, so dass die Walze ausgetauscht werden müsste. Derartige Beschädigungen können bereits auftreten, wenn das Konditionierwerkzeug länger als 30 s an einer Position verweilt. Durch die zuvor beschriebene Überwachung der Bewegung der Transportvorrichtung und/oder des Konditionierwerkzeugs wird sichergestellt, dass das Konditionierwerkzeug im Falle einer Störung von der Walzenoberfläche abgehoben wird, so dass eine Beschädigung der Walzenoberfläche verhindert wird.

Bei einem hydraulischen Antrieb wird mit der Überwachungseinrichtung bevorzugt ein hydraulischer Druck des Antriebs überwacht. Dadurch können eine elektronische Überwachung und damit das Risiko von Kurzschlüssen oder Funkenschlag vermieden werden.

Zur weiteren Verbesserung der Reinigung der Walzenoberfläche können in einer weiteren Ausführungsform der Walzvorrichtung bzw. des Verfahrens mehrere, vorzugsweise zwei, Konditionierwerkzeuge vorgesehen sein, welche an verschiedenen Umfangspositionen der Walze zum Abtragen einer Verschmutzung in Längsrichtung über die Oberfläche der Walze bewegbar sind. Hierdurch kann eine einzige Walze gleichzeitig mit mehreren Konditionierwerkzeugen gereinigt werden.

Unter einer Umfangsposition wird die azimutale Lage des Konditionierwerkzeugs relativ zur Rotationsachse der Walze verstanden. So können beispielsweise an zwei gegenüberliegenden Seiten der Walzenoberfläche Konditionierwerkzeuge vorgesehen sein.

Bei einer weiteren Ausführungsform der Walzvorrichtung bzw. des Verfahrens ist das Walzgerüst als Quarto-Kaltwalzgerüst mit zwei Arbeitswalzen und zwei Stützwalzen zur Herstellung von Aluminiumfolien ausgebildet und die Walzvorrichtung umfasst für jede Stützwalze mindestens ein Konditionierwerkzeug zum Abtragen einer Verschmutzung. Durch die Konditionierung der oberen und unteren Stützwalze eines Quarto-Walzgerüstes kann die Belagbildung beim Aluminiumwalzen deutlich reduziert und damit die Oberflächenbeschaffenheit des gewalzten Aluminiumprodukts erheblich verbessert werden. Bevorzugt erfolgt das Abtragen der Verschmutzung bei den beiden Stützwalzen des Quarto-Walzgerüsts gleichzeitig und kontinuierlich.

In einer weiter bevorzugten Ausführungsform der Walzvorrichtung bzw. des Verfahrens entspricht die Geschwindigkeit, mit der das Konditionierwerkzeug im Wesentlichen in Längsrichtung über die Oberfläche der Walze bewegt wird, dem 0,001-fachen bis 0,015-fachen, bevorzugt dem 0,005-fachen bis 0,010-fachen der Umfangsgeschwindigkeit der Walze. Versuche haben gezeigt, dass bei solchen Geschwindigkeiten eine ausreichende Reinigungswirkung erzielt und eine Musterbildung auf den Walzenoberflächen vermieden werden, während gleichzeitig das Konditionierwerkzeug in einer ausreichend geringen Gesamtzeit die vollständige Oberfläche der Walze bearbeitet, so dass die Belagbildung insgesamt ausreichend verhindert wird. Weiterhin sind die Geschwindigkeiten des Konditionierwerkzeugs ausreichend niedrig, so dass sich durch das Konditionierwerkzeug keine Zündquelle (z.B. durch Funken oder übermäßige Erwärmung) für Dämpfe oder Aerosole der kohlenwasserstoffhaltigen Gemische in der Umgebung der Walze ergibt.

In einer bevorzugten Ausführungsform des Verfahrens wird das Konditionierwerkzeug in einer Hin- und Herbewegung über die Oberfläche der Walze bewegt. Durch die Überlagerung der Hin- und Herbewegung des Konditionierwerkzeugs und die Rotation der Walze ergibt sich im mitrotierenden Bezugssystem der Walzenoberfläche eine mehrfach spiralförmige Trajektorie des Konditionierwerkzeugs relativ zur Walzenoberfläche, so dass mit einer einfachen Bewegung des Konditionierwerkzeugs die gesamte Oberfläche der Walze gereinigt werden kann.

Bei einer einzelnen Umdrehung der Walze wird entsprechend der Erstreckung des Konditionierwerkzeugs in Längsrichtung, insbesondere entsprechend der Schneidkantenlänge des Konditionierwerkzeugs, ein im wesentlichen ringförmiger Streifen der Walzenoberfläche gereinigt. Durch das Bewegen des Konditionierwerkzeugs in Längsrichtung der Walze über die Walzenoberfläche kann damit sukzessive die gesamte Walzenoberfläche gleichmäßig gereinigt und eine Musterbildung unterdrückt werden.

Die Geschwindigkeit, mit der das Konditionierwerkzeug im Wesentlichen in Längsrichtung über die Oberfläche der Walze bewegt wird, kann in einer weiteren Ausführungsform der Walzvorrichtung bzw. des Verfahrens so eingestellt werden, dass das Konditionierwerkzeug innerhalb einer vorgegebenen Anzahl von Walzenumdrehungen, beispielsweise von maximal 2000 oder maximal 1500 Walzenumdrehungen, auf die gesamte Walzenoberfläche der Walze einwirkt, so dass in dieser vorgegebenen Anzahl von Walzenumdrehungen die gesamte Walzenoberfläche gereinigt werden kann.

In einer weiteren bevorzugten Ausführungsform der Walzvorrichtung bzw. des Verfahrens wird das Konditionierwerkzeug in einer kontinuierlichen traversierenden Bewegung über die Oberfläche der Walze bewegt. Hierdurch kann eine gleichmäßige Reinigung der Walzenoberfläche erreicht und eine Musterbildung unterdrückt sowie eine Beschädigung der Walzenoberfläche durch das Konditionierwerkzeug vermieden werden.

Unter einer kontinuierlichen traversierenden Bewegung wird verstanden, dass das Konditionierwerkzeug für eine vollständige Reinigung der Walzenoberfläche ohne Unterbrechungen fortwährend in Längsrichtung der Walze über die Oberfläche der Walze bewegt wird, bevorzugt mit im Wesentlichen konstanter Geschwindigkeit mit Ausnahme von Richtungsumkehrungen des Konditionierwerkzeugs.

Das Konditionierwerkzeug wird bei einer weiteren Ausführungsform der Walzvorrichtung bzw. des Verfahrens mit einem Druck im Bereich von 0,1 bis 2,5 MPa (=N/mm²), bevorzugt im Bereich von 0,5 bis 2,2 MPa, insbesondere von 1 bis 2 MPa gegen die Oberfläche der Walze gedrückt. Es hat sich herausgestellt, dass bei diesen Drücken eine sehr gute Reinigungswirkung erzielt wird, ohne dass es zu einer Beschädigung der Walzenoberfläche oder des Konditionierwerkzeugs kommt.

In einer weiteren Ausführungsform der Walzvorrichtung bzw. des Verfahrens wird das Konditionierwerkzeug mindestens einmal, vorzugsweise mehrfach, in vorgegebenen zeitlichen Abständen regeneriert. Auf diese Weise kann die Reinigungswirkung des Konditionierwerkzeugs auch über längere Zeit erhalten werden. Die Regeneration des Konditionierwerkzeugs kann beispielsweise durch eine Reinigung des Konditionierwerkzeugs und/oder eine Abkühlung des Konditionierwerkzeugs erfolgen. Alternativ oder zusätzlich ist auch das Vorsehen einer Ruhezeit für das Konditionierwerkzeug möglich, in der das Konditionierwerkzeug nicht über die Oberfläche der Walze geführt wird. Diese Ruhezeit kann zusätzlich auch zur aktiven Reinigung oder aktiven Abkühlung des Konditionierwerkzeugs genutzt werden.

Eine Verbesserung der Reinigungswirkung wird in einer weiteren Ausführungsform der Walzvorrichtung bzw. des Verfahrens dadurch erreicht, dass die abgetragene Verschmutzung durch eine Abführungsvorrichtung aus dem Bereich der Walze abgeführt wird. Hierdurch kann einerseits die Reinigungswirkung des Konditionierwerkzeugs erhalten werden, da diese Wirkung nicht durch sich anlagernde Verschmutzungen beeinträchtigt wird. Weiterhin werden die Verschmutzungen kontrolliert aus dem Bereich der Walze abgeführt. Hierdurch kann verhindert werden, dass die abgetragene Verschmutzung wieder auf die Walzen oder gar auf das Walzprodukt gelangt. Besonders bevorzugt wird die abgetragene Verschmutzung aus dem Umformbereich der Walze abgeführt, beispielsweise seitlich in Längsrichtung aus dem Walzbereich heraus.

Das Abführen der Verschmutzung kann beispielsweise durch Absaugen erfolgen. Hierzu kann als Abführungsvorrichtung eine entsprechende Absaugvorrichtung im Bereich des Konditionierwerkzeugs vorgesehen sein. Bevorzugt bewegt sich die Saugöffnung einer solchen Absaugvorrichtung zusammen mit dem Konditionierwerkzeug. Alternativ oder zusätzlich kann die Verschmutzung auch ausgespült werden, indem eine Reinigungsflüssigkeit in den Bereich des Konditionierwerkzeugs eingebracht und abgeführt, insbesondere abgesaugt wird. Die Verschmutzung wird dann durch die Reinigungsflüssigkeit weggespült. Alternativ oder zusätzlich kann die Verschmutzung auch durch einen Gasstrom abgeblasen werden.

In einer weiteren Ausführungsform der Walzvorrichtung bzw. des Verfahrens weist die Walzvorrichtung eine Steuerungsvorrichtung zur Steuerung der Transportvorrichtung, des Konditionierwerkzeugs und/oder des Walzgerüstes auf, wobei die Steuerungsvorrichtung zur Durchführung mindestens einer Ausführungsform des erfindungsgemäßen Verfahrens eingerichtet ist.

Die Ausführungsformen der erfindungsgemäßen Walzvorrichtung sind besonders für die Durchführung einer Ausführungsform des erfindungsgemäßen Verfahrens geeignet. Die Ausführungsformen der erfindungsgemäßen Verfahren werden zudem besonderes bevorzugt unter Verwendung einer Ausführungsform der erfindungsgemäßen Walzvorrichtung durchgeführt.

Die Steuerungsvorrichtung kann beispielsweise als elektronische Schaltung bereitgestellt werden, welche die Durchführung der Konditionierung während des Walzbetriebs der Walze veranlasst. Zusätzlich oder alternativ kann die Steuerungsvorrichtung auch einen Rechner umfassen, der mindestens einen Speicher und eine elektronische Verarbeitungseinheit umfasst, wobei der elektronische Speicher Befehle enthält, die die elektronische Verarbeitungseinrichtung veranlassen, eines der beschriebenen Verfahren durchzuführen.

In einer bevorzugten Ausführungsform der Walzvorrichtung bzw. des Verfahrens sind die Steuerungsvorrichtung, die Transportvorrichtung, das Konditionierwerkzeug und/oder das Walzgerüst so eingerichtet, dass die Bearbeitungsintensität des Konditionierwerkzeugs durch Veränderung eines einzelnen, mehrerer oder sämtlicher der nachfolgend genannten Parameter einstellbar ist:
- die Bewegungsgeschwindigkeit des Konditionierwerkzeugs,
- der auf die Walzenoberfläche vom Konditionierwerkzeug ausgeübte Druck,
- der Spanwinkel zwischen der Spanfläche und der durch die Schneidkante senkrecht zur Walzenoberfläche verlaufenden Ebene,
- die Länge und der Abstand der Konditionierintervalle, in denen das mechanische Abtragen durch das Konditionierwerkzeug erfolgt und
- die Frequenz, mit der das Konditionierwerkzeug innerhalb der Konditionierintervalle über die Oberfläche der Walze bewegt wird.

Die Einstellbarkeit dieser Parameter kann beispielsweise über die Steuerungsvorrichtung erfolgen, z.B. indem die Parameter durch den Benutzer der Anlage in einen Rechner der Steuerungsvorrichtung eingegeben werden. Einzelne, mehrere oder sämtliche der oben genannten Parameter können alternativ auch manuell mechanisch eingestellt werden. Beispielsweise kann der Winkel zwischen der Oberfläche der Walze und einer Schneidenfläche des Konditionierwerkzeugs durch eine dazu vorgesehene Winkeljustiereinrichtung am Konditionierwerkzeug eingestellt werden. Bevorzugt ermöglicht die Walzvorrichtung eine stufenlose Einstellbarkeit einzelner, mehrerer oder sämtlicher der oben genannten Parameter. Diese Ausführungsform hat den Vorteil, dass die Reinigung der Walzvorrichtung den Erfordernissen entsprechend angepasst werden kann, insbesondere stufenlos.

Weitere Merkmale und Vorteile des Verfahrens sowie der Walzvorrichtung ergeben sich weiterhin aus der nachfolgenden Beschreibung von Ausführungsbeispielen, bei denen auf die beigefügte Zeichnung Bezug genommen wird.

In der Zeichnung zeigen
Fig. 1 ein Ausführungsbeispiel der erfindungsgemäßen Walzvorrichtung und des erfindungsgemäßen Verfahrens bei einem Quarto-Kaltwalzwerk in schematischer Seitenansicht,
Fig. 2 das Ausführungsbeispiel aus Fig. 1 in schematischer Teil-Vorderansicht,
Fig. 3 das Ausführungsbeispiel aus Fig. 1 in schematischer Aufsicht,
Fig. 4 das Ausführungsbeispiel aus Fig. 1 in schematischer Aufsicht zu einem anderen Zeitpunkt während der Durchführung des Verfahrens,
Fig. 5 einen detaillierten Ausschnitt des Ausführungsbeispiels aus Fig. 1 in Seitenansicht,
Fig. 6 eine Trajektorie eines Konditionierwerkzeuges auf der Oberfläche einer Walze nach einem Ausführungsbeispiel der erfindungsgemäßen Walzvorrichtung und des erfindungsgemäßen Verfahrens und
Fig. 7 ein schematisches Ablaufdiagram für ein Ausführungsbeispiels des erfindungsgemäßen Verfahrens.

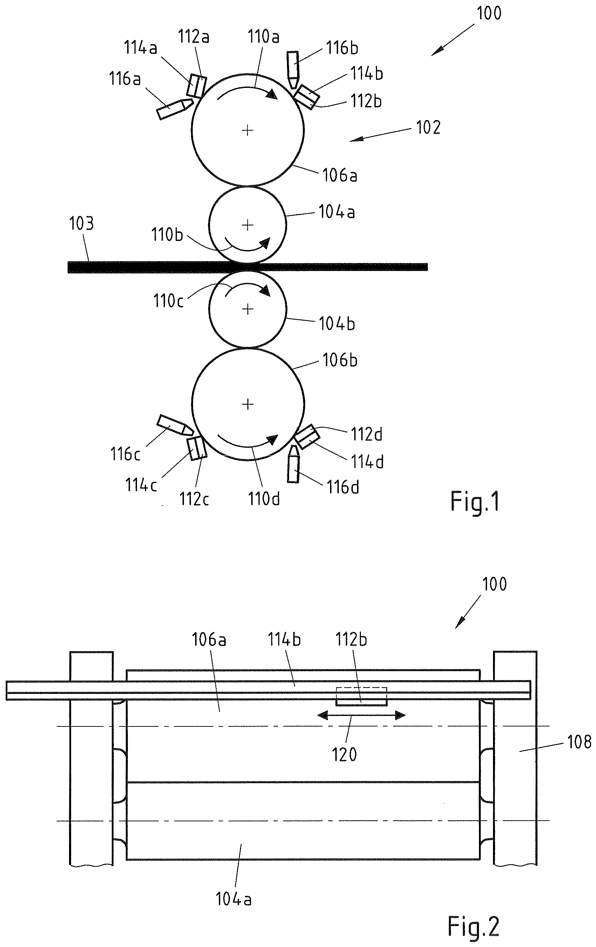

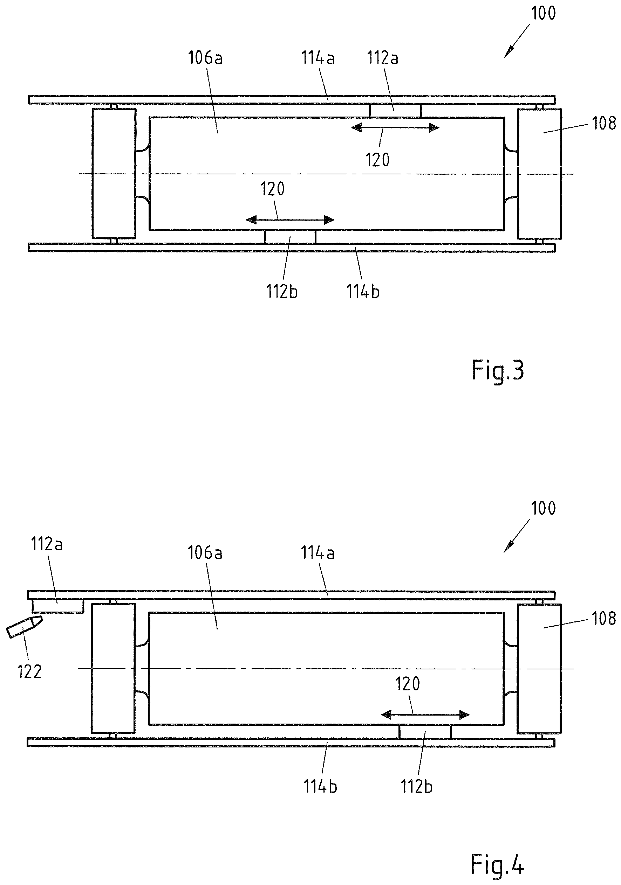

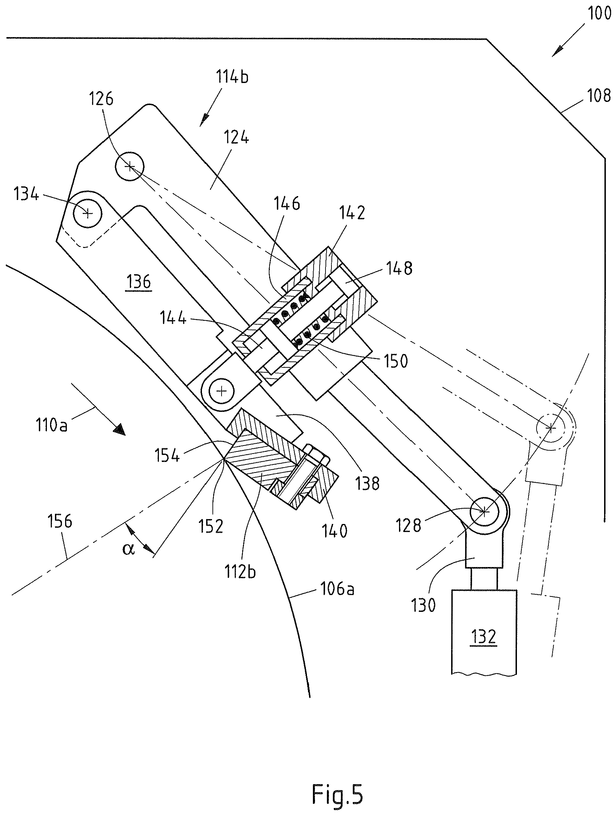

Die Figuren 1 - 5 zeigen ein Ausführungsbeispiel einer erfindungsgemäßen Walzvorrichtung und eines erfindungsgemäßen Verfahrens. Fig. 1 zeigt eine schematische Seitenansicht einer Walzvorrichtung 100; Fig. 2 zeigt die Vorderansicht des oberen Teils der Walzvorrichtung 100 aus Fig. 1; Fig. 3 zeigt eine Aufsicht der Walzvorrichtung 100 zu einem ersten Zeitpunkt während der Durchführung des Verfahrens; Fig. 4 zeigt eine Aufsicht der Walzvorrichtung 100 zu einem zweiten Zeitpunkt während der Durchführung des Verfahrens; und Fig. 5 zeigt einen detaillierten Ausschnitt des oberen Teils der Walzvorrichtung 100 in Seitenansicht. Die Walzvorrichtung umfasst ein Walzgerüst 102 zum Walzen eines Aluminiumbandes 103 bzw. einer Aluminiumfolie. Das Walzgerüst 102 ist als Quarto-Walzgerüst ausgebildet und weist eine erste und eine zweite Arbeitswalze 104a-b, eine erste und eine zweite Stützwalze 106a-b sowie einen Rahmen 108 auf, in dem die Walzen 104a-b, 106a-b gelagert sind. Das Walzgerüst 102 umfasst zudem Antriebe (nicht dargestellt) für die Stützwalzen 106a-b, so dass die Walzen direkt oder indirekt entsprechend der durch die Pfeile 110a-d angedeuteten Drehrichtung angetrieben werden können. Die Antriebe können so ausgestaltet sein, dass auch eine entgegengesetzte Drehrichtung ermöglicht wird. Damit kann das Walzgerüst 102 beispielsweise auch im Reversierbetrieb betrieben werden.

Die Walzvorrichtung 100 umfasst weiterhin vier als Putzsteine ausgebildete Konditionierwerkzeuge 112a-d sowie vier Transportvorrichtungen 114a-d, wobei jedes der Konditionierwerkzeuge 112a-d jeweils so an einer der Transportvorrichtungen 114a-d befestigt ist, dass es im Wesentlichen in Längsrichtung der Walzen (siehe Pfeil 120) über die Oberfläche einer der Walzen des Walzgerüstes 102 bewegt werden kann. Im vorliegenden Ausführungsbeispiel sind die Transportvorrichtungen 114a-b mit den zugehörigen Konditionierwerkzeugen 112a-b der oberen Stützwalze 106a und die Transportvorrichtungen 114c-d mit den zugehörigen Konditionierwerkzeugen 112c-d der unteren Stützwalze 106b zugeordnet. Die Transportvorrichtungen 114a-d sind am Rahmen 108 des Walzgerüsts 102 befestigt.

Die Walzvorrichtung 100 weist zusätzlich noch eine Steuerungsvorrichtung auf (nicht dargestellt), durch die die Transportvorrichtung und das Walzgerüst gesteuert werden können. Die Steuerungsvorrichtung kann beispielsweise einen Rechner oder eine speicherprogrammierbare Steuerung umfassen.

Die Konditionierung der Stützwalzen 106a-b erfolgt, während das Aluminiumband 103 mit dem Walzgerüst 102 gewalzt wird, d.h. während des laufenden Produktionsprozesses. Die Konditionierwerkzeuge 112a-d werden dazu entlang der Transportvorrichtung 114a-d in Längsrichtung der Walzen über die Oberfläche der oberen und unteren Stützwalze 106a-b bewegt, während die Arbeits- und Stützwalzen 104a-b, 106a-b in der durch die Pfeile 110a-d angezeigten Drehrichtung rotieren und das Aluminiumband 103 zwischen den Arbeitswalzen 104a-b gewalzt wird. Die Konditionierwerkzeuge 112a-d sind hierbei in mechanischem Kontakt mit den Oberflächen der Stützwalzen 106a-b, so dass Verschmutzungen auf den Stützwalzen 106a-b mechanisch abgetragen werden. Insbesondere kann auf diese Weise der sich beim Walzen von Aluminiumprodukten auf den Stützwalzen absetzende Belag abgetragen werden, der ansonsten zu einem schnelleren Verschleiß der Walze bzw. zu einer Verschlechterung des Walzergebnisses führen würde.

Die Walzvorrichtung 100 umfasst weiterhin Abführungsvorrichtungen 116a-d, welche vorliegend als Absaugungsvorrichtungen ausgebildet sind. Durch die Abführungsvorrichtungen 116a-d können die durch die Konditionierwerkzeuge 112a-d von den Oberflächen der Stützwalzen 106a-b mechanisch abgetragenen Verschmutzungen aus dem Bereich der Walzen abgeführt, insbesondere abgesaugt werden. Dadurch wird vermieden, dass die abgetragenen Verschmutzungen erneut an den Walzen anhaften oder auf das Aluminiumband 103 gelangen.

Fig. 3 zeigt eine Aufsicht der Walzvorrichtung 100 zu einem ersten Zeitpunkt während der Durchführung des Verfahrens. Die beiden dargestellten Konditionierwerkzeuge 112a und 112b werden vorzugweise gleichzeitig entlang ihrer jeweils zugeordneten Führungsvorrichtungen 114a-b geführt. Die Konditionierwerkzeuge 112a-b führen eine Hin- und Herbewegung in Längsrichtung (siehe Pfeil 120) über die Oberfläche der Stützwalze 106a aus, während sie mechanisch Verschmutzungen von der Walzenoberfläche abtragen.

Fig. 4 zeigt die Aufsicht aus Fig. 3 zu einem zweiten Zeitpunkt während der Durchführung des Verfahrens. Während das Konditionierwerkzeug 112a weiterhin über die Oberfläche der Stützwalze 106a bewegt wird, verweilt das Konditionierwerkzeug 112b für eine vorgegebene Zeit in einer seitlichen Ruheposition zur Regeneration des Konditionierwerkzeugs 112b. Das Konditionierwerkzeug 112b kann in dieser Ruheposition abkühlen und gereinigt werden. Zu diesem Zweck ist eine Reinigungsvorrichtung 122 vorgesehen, durch die das Konditionierwerkzeug 112b mit einer Reinigungsflüssigkeit beaufschlagt werden kann, um Verschmutzungen von dem Konditionierwerkzeug 112b abzuspülen.

Fig. 5 zeigt einen Ausschnitt des oberen Teils der Walzvorrichtung 100 in Seitenansicht, mit einer detaillierteren Darstellung des Konditionierwerkzeugs 112b und der Transportvorrichtung 114b.

Die Transportvorrichtung 114b weist eine Traverse 124 auf, die um einen Drehpunkt 126 drehbar am Rahmen 108 befestigt ist. An einem vom Drehpunkt 126 beabstandeten Lager 128 ist die Traverse 124 mit dem Kolben 130 eines am Rahmen 108 befestigten Hydraulikzylinders 132 verbunden. Über eine Ansteuerung des Hydraulikzylinders 132 kann die Traverse 124 zu Wartungszwecken oder im Falle einer Störung von der Walze 106a weggeschwenkt werden (siehe strichpunktierten Umriss in Fig. 5), so dass damit auch das Konditionierwerkzeug 112b von der Walzenoberfläche abgehoben wird. Insbesondere kann eine Regelung vorgesehen sein, welche die Traverse 124 von der Walze 106a wegschwenkt, wenn die traversierende Bewegung des Konditionierwerkzeugs 112b über die Walzenoberfläche gestört ist.

An der Traverse 124 ist um den Drehpunkt 134 drehbar eine zweite Traverse 136 befestigt, welche an dem dem Drehpunkt 134 gegenüberliegenden Ende eine Linearführung 138 aufweist. Die Linearführung 138 erstreckt sich in Längsrichtung der Walze 106a und ist so mit einer Halterung 140 für das Konditionierwerkzeug 112b gekoppelt, dass das Konditionierwerkzeug im Wesentlichen in Längsrichtung über die Oberfläche der Walze 106a bewegt werden kann. Bei der Linearführung 138 kann es sich beispielsweise um eine hydraulisch betriebene Linearführung handeln. Die Transportvorrichtung 114b weist weiterhin noch eine Verstelleinrichtung 142 auf, mit der der Druck eingestellt werden kann, den das Konditionierwerkzeug 112b auf die Oberfläche der Walze 106a ausübt. Die Verstelleinrichtung 142 ist zwischen der Traverse 124 und der zweiten Traverse 136 angeordnet und umfasst einen an der zweiten Traverse 136 befestigten Kolben 144, der in einem an der Traverse 124 befestigten Zylinder 146 bewegbar ist. Der Kolben 144 kann mittels einer Verstellschraube 148 weiter aus dem Zylinder 146 heraus bewegt werden, so dass der Druck des Konditionierwerkzeugs 112b auf die Walze 106a erhöht wird. Im Zylinder 146 ist weiterhin noch eine Feder 150 vorgesehen, die auf den Kolben 144 eine Kraft in Richtung der Walze 106a ausübt.

Die Transportvorrichtung 114b und die Halterung 140 sind so angeordnet, dass die Schneidkante 152 des in dem dargestellten Beispiel als Putzstein ausgebildete Konditionierwerkzeugs 112b so an der Walzenoberfläche anliegt, dass der Spanwinkel zwischen der Spanfläche 154 und der durch die Schneidkante 152 senkrecht zur Walzenoberfläche verlaufenden Ebene 156 negativ ist, und zwar insbesondere zwischen -5° und -45°. Bei einem negativen Spanwinkel verläuft die Spanfläche 154 ausgehend von der Schneidkante 152 in Schnittrichtung (ersichtlich bei Projektion der Spanfläche auf die lokale Tangentialebene der Walzenoberfläche durch die Schneidkante), d.h. entgegen der Drehrichtung der Walze 106a gemäß Pfeil 110a (wie in Fig. 5 dargestellt). Aus Gründen der Übersichtlichkeit ist in Fig. 5 nicht der Spanwinkel selbst, sondern dessen Scheitelwinkel α eingetragen.

Der als Konditionierwerkzeug 112b verwendete Putzstein besteht aus einer Matrix aus Faservlies und Harz mit darin eingelagerten Aluminiumoxidpartikeln. Die Korngrößenverteilung weist einen kumulativen Anteil im Bereich von 50 bis 800 µm von mehr als 99 % auf. Der Median der Korngrößenverteilung liegt bei ca. 200 µm. Der Putzstein weist weiterhin einen Porenflächenanteil von ca. 79 % bei einer Dichte von 787 kg/m³ sowie folgende mechanische Eigenschaften auf: mₑ = 154 MPa und R_{d}(50%) = 61,5 MPa.

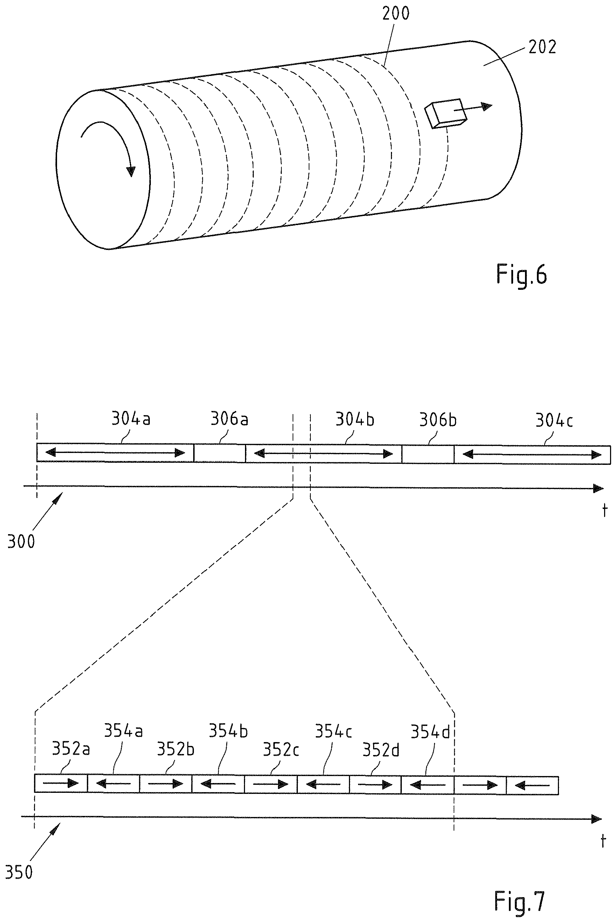

Fig. 6 zeigt eine mögliche Trajektorie, d.h. den Bewegungspfad, eines Konditionierwerkzeugs auf der Oberfläche einer Walze bei Durchführung des erfindungsgemäßen Verfahrens. Die Form der Trajektorie 200 ergibt sich aus der Überlagerung der Bewegung des Konditionierwerkzeugs in Längsrichtung der Walze und der Bewegung der Walzenoberfläche 202 senkrecht zur Längsrichtung der Walze durch die Walzenrotation. Das Ergebnis dieser Überlagerung ist eine spiralförmige Trajektorie des Konditionierwerkzeugs auf der Walzenoberfläche. Bei jeder Umdrehung der Walze wird ein im Wesentlichen ringförmiger Streifen der Walzenoberfläche gereinigt. Durch die Bewegung des Konditionierwerkzeugs in Längsrichtung der Walze wird daher nach und nach die gesamte Oberfläche der Walze gereinigt.

Fig. 7 zeigt ein schematisches Ablaufdiagramm für ein Ausführungsbeispiel des erfindungsgemäßen Verfahrens, das an einer Walzvorrichtung durchgeführt wird, wie sie beispielsweise in Fig. 1 gezeigt wird. Während der gesamten Verfahrensdauer befindet sich die Walzvorrichtung im Produktionsbetrieb.

Der obere Teil der Figur 6 zeigt einen Zeitstrahl 300 mit einem möglichen zeitlichen Ablauf verschiedener Verfahrensschritte während der Durchführung des Verfahrens. Zu einer bestimmten Startzeit 302 beginnt ein erstes Konditionierintervall 304a, in dem ein Konditionierwerkzeug in einer Hin- und Herbewegung im Wesentlichen in Längsrichtung über die Oberfläche einer Walze der Walzvorrichtung bewegt wird und dadurch eine Verschmutzung, insbesondere einen Belag, von der Oberfläche der Walze abträgt. Nach Ablauf einer vorgegeben Zeit fährt das Konditionierwerkzeug in eine Ruheposition und verbleibt dort für die Dauer eines Regenerationsintervalls 306a. Während des Regenerationsintervalls 306a kann das Konditionierwerkzeug abkühlen bzw. von Verschmutzungen gereinigt werden. An das Regenerationsintervall 306a schließen sich weitere Konditionierintervalle 304b, 304c und Regenerationsintervalle 306b an.

Der untere Teil der Figur 6 zeigt einen Zeitstrahl 350, mit dem ein Ausschnitt aus dem Konditionierintervall 304b dargestellt wird. In diesem Ausschnitt wechseln sich erste Intervalle 352a-d und zweite Intervalle 354a-d ab. In den ersten Intervallen 352a-d wird das Konditionierwerkzeug im Wesentlichen in Längsrichtung der Walze von links nach rechts über die Oberfläche der Walze geführt. In den zweiten Intervallen 354a-d wird das Konditionierwerkzeug im Wesentlichen in Längsrichtung der Walze von rechts nach links über die Oberfläche der Walze geführt. Die alternierende Folge von ersten und zweiten Intervallen ergibt damit eine Hin- und Herbewegung des Konditionierwerkzeugs. Durch die zeitgleiche Rotation der Walze ergibt sich bei jeder Hin- oder Herbewegung eine spiralförmige Trajektorie des Konditionierwerkzeug über die Walzenoberfläche, wie sie in Fig. 5 gezeigt ist. Die Hin- und Herbewegung des Konditionierwerkzeugs erfolgt kontinuierlich ohne Unterbrechungen über einen gewissen Zeitraum und von den Wendepunkten abgesehen im Wesentlichen auch mit gleichbleibender Geschwindigkeit. Das Konditionierwerkzeug führt demnach innerhalb der Konditionierintervalle 304a-c jeweils eine kontinuierlich traversierende Bewegung aus.

Die Geschwindigkeit, mit der das Konditionierwerkzeug im Wesentlichen in Längsrichtung über die Oberfläche der Walze bewegt wird, wird bevorzugt auf das 0,001-fache bis 0,015-fache der Umfangsgeschwindigkeit der Walze eingestellt. Bei einer typischen Umfangsgeschwindigkeit von 1500 m/min. wird die Geschwindigkeit des Konditionierwerkzeugs damit bevorzugt auf 1,5 m/min. bis 22,5 m/min. eingestellt.

Die Geschwindigkeit des Konditionierwerkzeugs kann natürlich auch so eingestellt werden, dass das Konditionierwerkzeug innerhalb einer vorgegebenen Anzahl von Walzenumdrehungen, vorzugsweise von 1000 oder 2000 Walzenumdrehungen, die Oberfläche der Walze vollständig gereinigt hat.

## Patentansprüche

1. Walzvorrichtung (100), insbesondere zum Kaltwalzen von Aluminiumbändern, mit einem Walzgerüst (102) umfassend eine Walze (104a-b, 106a-b), vorzugsweise mindestens zwei Arbeitswalzen (104a-b) und mindestens zwei Stützwalzen (106a-b),
- wobei die Walzvorrichtung (100) ein Konditionierwerkzeug (112a-d) aufweist, mit dem während des Walzbetriebs eine Verschmutzung von der Oberfläche der Walze (104a-b, 106a-b) mechanisch abtragbar ist, und
- wobei die Walzvorrichtung (100) eine angetriebene Transportvorrichtung (114a-d) aufweist, mit der das Konditionierwerkzeug (112a-d) während des Walzbetriebs im Wesentlichen in Längsrichtung der Walze über die Oberfläche der Walze (104a-b, 106a-b) verfahrbar ist,
**dadurch gekennzeichnet, dass**
- das Konditionierwerkzeug (112a-d) einen keilförmigen Bereich mit einer Spanfläche, einer Freifläche und einer Schneidkante zum Abtragen der Verschmutzung von der Oberfläche der Walze aufweist,
- die Schneidkante im Wesentlichen in Längsrichtung der Walze verläuft mit einer Abweichung von der Längsrichtung bis maximal 20° und
- der Spanwinkel zwischen der Spanfläche und der durch die Schneidkante senkrecht zur Walzenoberfläche verlaufenden Ebene negativ ist und in einem Bereich zwischen -5° und -45° liegt.

2. Walzvorrichtung (100) nach Anspruch 1,
**dadurch gekennzeichnet, dass**
die Schneidkante im Wesentlichen in Längsrichtung der Walze verläuft mit einer Abweichung von der Längsrichtung bis maximal 10°.

3. Walzvorrichtung (100) nach Anspruch 2,
**dadurch gekennzeichnet, dass**
der Spanwinkel zwischen der Spanfläche und der durch die Schneidkante senkrecht zur Walzenoberfläche verlaufenden Ebene negativ ist und in einem Bereich zwischen -10° und -40° liegt.

4. Walzvorrichtung (100) nach einem der Ansprüche 1 bis 3,
**dadurch gekennzeichnet, dass**
als Konditionierwerkzeug (112a-d) ein Putzstein verwendet wird, der in eine Matrix eingelagerte Partikel, insbesondere Aluminiumoxidpartikel, aufweist.

5. Walzvorrichtung (100) nach Anspruch 4,
**dadurch gekennzeichnet, dass**
die Matrix des Putzsteins auf einer Mischung aus Fasern und Harz basiert und in die Matrix Aluminiumoxidpartikel eingelagert sind, wobei die Aluminiumoxidpartikel eine Korngrößenverteilung mit einem kumulativen Anteil im Bereich 50 - 800 µm von mindestens 85 % aufweisen.

6. Walzvorrichtung (100) nach Anspruch 4 oder 5,
**dadurch gekennzeichnet, dass**
der Putzstein eine Porosität mit einem Porenflächenanteil im Bereich von 70 - 90 % aufweist.

7. Walzvorrichtung (100) nach einem der Ansprüche 4 bis 6,
**dadurch gekennzeichnet, dass**
der Putzstein folgende mechanische Eigenschaften aufweist: mₑ im Bereich von 125 bis 175 MPa und/oder R_{d}(50%) im Bereich von 50 bis 70 MPa.

8. Walzvorrichtung (100) nach einem der Ansprüche 1 bis 7,
**dadurch gekennzeichnet, dass**
die Walzvorrichtung (100) eine hydraulisch angetriebene Transportvorrichtung (114a-d) aufweist, wobei als Hydraulikflüssigkeit vorzugsweise ein beim Walzen verwendetes Walzöl vorgesehen ist.

9. Walzvorrichtung nach einem der Ansprüche 1 bis 8,
**dadurch gekennzeichnet, dass**
die Walzvorrichtung eine Überwachungseinrichtung aufweist, welche zur Überwachung der Bewegung der Transportvorrichtung und/oder des Konditionierwerkzeugs eingerichtet ist, und die Überwachungseinrichtung und die Transportvorrichtung so eingerichtet sind, dass das Konditionierwerkzeug im Falle einer Störung der Bewegung der Transportvorrichtung und/oder des Konditionierwerkzeugs von der Oberfläche der Walze wegbewegt wird.

10. Verfahren zur Konditionierung einer Walzenoberfläche, vorzugsweise einer Walze eines Quarto-Kaltwalzwerkes zur Herstellung von Aluminiumfolien, insbesondere einer Walze eines Walzgerüsts einer Walzvorrichtung nach einem der Ansprüche 1 bis 9,
- bei dem mit einem Konditionierwerkzeug (112a-d) mechanisch eine Verschmutzung, insbesondere ein Belag, von der Oberfläche (202) einer Walze (104a-b, 106a-b) abgetragen wird,
- bei dem das Konditionierwerkzeug (112a-d) während des Abtragens der Verschmutzung im Wesentlichen in Längsrichtung der Walze über die Oberfläche (202) der Walze (104a-b, 106a-b) bewegt wird und
- bei dem das Abtragen der Verschmutzung während des Walzbetriebs der Walze (104a-b, 106a-b) erfolgt,
- wobei das Konditionierwerkzeug (112a-d) einen keilförmigen Bereich mit einer Spanfläche, einer Freifläche und einer Schneidkante zum Abtragen der Verschmutzung von der Oberfläche der Walze aufweist,
- wobei die Schneidkante im Wesentlichen in Längsrichtung der Walze verläuft mit einer Abweichung von der Längsrichtung bis maximal 20° und
- wobei der Spanwinkel zwischen der Spanfläche und der durch die Schneidkante senkrecht zur Walzenoberfläche verlaufenden Ebene negativ ist und in einem Bereich zwischen -5° und -45° liegt.

11. Verfahren nach Anspruch 10,
**dadurch gekennzeichnet, dass**
das Konditionierwerkzeug (112a-d) entsprechend dem Konditionierwerkzeug einer Walzvorrichtung nach einem der Ansprüche 2 bis 7 ausgebildet ist.

12. Verfahren nach Anspruch 10 oder 11,
**dadurch gekennzeichnet, dass**
die Geschwindigkeit, mit der das Konditionierwerkzeug (112a-d) im Wesentlichen in Längsrichtung über die Oberfläche (202) der Walze (104a-b, 106a-b) bewegt wird, dem 0,001-fachen bis 0,015-fachen der Umfangsgeschwindigkeit der Walze entspricht.

13. Verfahren nach einem der Ansprüche 10 bis 12,
**dadurch gekennzeichnet, dass**
das Konditionierwerkzeug (112a-d) in einer kontinuierlichen traversierenden Bewegung über die Oberfläche (202) der Walze (104a-b, 106a-b) bewegt wird.

14. Verfahren nach einem der Ansprüche 10 bis 13,
**dadurch gekennzeichnet, dass**
das Konditionierwerkzeug (112a-d) mit einem Druck im Bereich von 0,1 bis 2,5 MPa gegen die Oberfläche (202) der Walze (104a-b, 106a-b) gedrückt wird.

15. Verfahren nach einem der Ansprüche 10 bis 14,
**dadurch gekennzeichnet, dass**
das Konditionierwerkzeug (112a-d) mindestens einmal, vorzugsweise mehrfach, in vorgegebenen Abständen regeneriert wird, insbesondere durch eine Reinigung, eine Abkühlung und/oder eine Ruhezeit des Konditionierwerkzeug.

## Claims

1. Rolling device (100), in particular for cold rolling of aluminium strips, having a roll stand (102) comprising a roll (104a-b, 106a-b), preferably at least two work rolls (104a-b) and at least two back-up rolls (106a-b),
- wherein the rolling device (100) has a conditioning tool (112a-d), by means of which contamination can be mechanically removed from the surface of the roll (104a-b, 106a-b) during the rolling operation, and
- wherein the rolling device (100) has a driven transport device (114a-d), by means of which the conditioning tool (112a-d) can be moved across the surface of the roll (104a-b, 106a-b) substantially in a longitudinal direction of the roll during the rolling operation,
**characterised in that**
- the conditioning tool (112a-d) has a wedge-shaped area with a rake face, a flank face and a cutting edge for removal of the contamination from the surface of the roll,
- the cutting edge runs substantially in the longitudinal direction of the roll with a deviation from the longitudinal direction of up to a maximum of 20°, and
- the rake angle between the rake face and the plane running through the cutting edge perpendicular to the roll surface is negative and is in a range between -5° and -45°.

2. Rolling device (100) according to claim 1,
**characterised in that**
the cutting edge runs substantially in the longitudinal direction of the roll with a deviation from the longitudinal direction of up to a maximum of 10°.

3. Rolling device (100) according to claim 2,
**characterised in that**
the rake angle between the rake face and the plane running through the cutting edge perpendicular to the roll surface is negative and is preferably in a range between -10° and -40°.

4. Rolling device (100) according to one of claims 1 to 3,
**characterised in that**
as the conditioning tool (112a-d) a cleaning block is used, having particles embedded in a matrix, in particular aluminium oxide particles.

5. Rolling device (100) according to claim 4,
**characterised in that**
the matrix of the cleaning block is based on a mixture of fibres and resin and aluminium oxide particles are embedded in the matrix, wherein the aluminium oxide particles have a grain size distribution with a cumulative proportion in the range 50 - 800 µm of at least 85 %.

6. Rolling device (100) according to claim 4 or 5,
**characterised in that**
the cleaning block has a porosity with a pore area proportion in the range 70 - 90 %.

7. Rolling device (100) according to one of claims 4 to 6,
**characterised in that**
the cleaning block has the following mechanical properties: mₑ in the range 125 to 175 MPa and/or R_{d}(50%) in the range 50 to 70 MPa.

8. Rolling device (100) according to one of claims 1 to 7,
**characterised in that**
the rolling device (100) has a hydraulically driven transport device (114a-d), wherein as the hydraulic fluid preferably a rolling oil used during rolling is provided.

9. Rolling device according to one of claims 1 to 8,
**characterised in that**
the rolling device has a monitoring device, configured for monitoring the movement of the transport device and/or of the conditioning tool, and the monitoring device and the transport device are configured such that the conditioning tool in the event of a malfunction in the movement of the transport device and/or of the conditioning tool is moved away from the surface of the roll.

10. Method for conditioning a roll surface, preferably of a roll of a quarto cold rolling mill for the manufacture of aluminium foil, in particular a roll of a roll stand of a rolling device according to one of claims 1 to 9,
- in which contamination, in particular a residue film, is mechanically removed from the surface (202) of a roll (104a-b, 106a-b) by means of a conditioning tool (112a-d),
- in which the conditioning tool (112a-d) is moved across the surface (202) of the roll (104a-b, 106a-b) substantially in the longitudinal direction of the roll during the removal of the contamination, and
- in which the removal of the contamination takes place during the rolling operation of the roll (104a-b, 106a-b),
- wherein the conditioning tool (112a-d) has a wedge-shaped area with a rake face, a flank face and a cutting edge for removal of the contamination from the surface of the roll,
- wherein the cutting edge runs substantially in the longitudinal direction of the roll with a deviation from the longitudinal direction of up to a maximum of 20°, and
- wherein the rake angle between the rake face and the plane running through the cutting edge perpendicular to the roll surface is negative and in a range between - 5° and -45°.

11. Method according to claim 10,
**characterised in that**
the conditioning tool (112a-d) has a design corresponding to the conditioning tool of a rolling device according to one of claims 2 to 7.

12. Method according to claim 10 or 11,
**characterised in that**
the speed at which the conditioning tool (112a-d) is moved substantially in the longitudinal direction across the surface (202) of the roll (104a-b, 106a-b), corresponds to 0.001 times to 0.015 times the circumferential speed of the roll.

13. Method according to one of claims 10 to 12,
**characterised in that**
the conditioning tool (112a-d) is moved in a continuous traversing movement across the surface (202) of the roll (104a-b, 106a-b).

14. Method according to one of claims 10 to 13,
**characterised in that**
the conditioning tool (112a-d) is pressed against the surface (202) of the roll (104a-b, 106a-b) with a pressure in the range 0.1 to 2.5 MPa.

15. Method according to one of claims 10 to 14,
**characterised in that**
the conditioning tool (112a-d) is regenerated at least once, preferably multiple times, at prescribed time intervals, in particular by means of cleaning, cooling and/or an idle time of the conditioning tool.

## Revendications

1. Dispositif de laminage (100), en particulier pour le laminage à froid de bandes d'aluminium, équipé d'une cage de laminoir (102) comportant un cylindre (104a-b, 106a-b), de préférence au moins deux cylindres de travail (104a-b) et au moins deux cylindres d'appui (106a-b),
- où le dispositif de laminage (100) présente un outil de conditionnement (112a-d), avec lequel l'on peut éliminer mécaniquement un encrassement de la surface du cylindre (104a-b, 106a-b) pendant l'opération de laminage et
- où le dispositif de laminage (100) présente un dispositif de transport entrainé (114a-d), avec lequel l'outil de conditionnement (112a-d) peut être déplacé au-dessus de la surface du cylindre (104a-b, 106a-b) pendant l'opération de laminage, sensiblement dans le sens longitudinal du cylindre,
**caractérisé en ce que**
- l'outil de conditionnement (112a-d) présente une section cunéiforme avec une surface de coupe, une surface libre et un bord coupant pour l'élimination de l'encrassement de la surface du cylindre,
- le bord coupant passe sensiblement dans le sens longitudinal du cylindre avec un écart par rapport au sens longitudinal allant jusqu'à un maximum de 20° et
- l'angle de coupe entre la surface de coupe et le plan passant à travers le bord coupant, perpendiculairement par rapport à la surface de cylindre, est négatif et se situe dans un intervalle entre -5° et -45°.

2. Dispositif de laminage (100) selon la revendication 1, **caractérisé en ce que** le bord coupant passe sensiblement dans le sens longitudinal du cylindre avec un écart par rapport au sens longitudinal allant jusqu'à un maximum de 10°.

3. Dispositif de laminage (100) selon la revendication 2, **caractérisé en ce que** l'angle de coupe entre la surface de coupe et le plan passant à travers le bord coupant, perpendiculairement par rapport à la surface du cylindre, est négatif et se situe dans un intervalle entre -10° et -40°.

4. Dispositif de laminage (100) selon l'une des revendications 1 à 3, **caractérisé en ce que** l'on utilise en tant qu'outil de conditionnement (112a-d) une pierre de nettoyage qui présente des particules sauvegardées dans une matrice, en particulier des particules d'oxyde d'aluminium.

5. Dispositif de laminage (100) selon la revendication 4, **caractérisé en ce que** la matrice de la pierre de nettoyage est fabriquée à partir d'un mélange de fibres et résines et des particules d'oxyde d'aluminium que sont sauvegardées dans la matrice, où les particules d'oxyde d'aluminium présentent une distribution granulométrique avec une proportion cumulative comprise entre 50 et 800 µm d'au moins 85 %.

6. Dispositif de laminage (100) selon la revendication 4 ou 5, **caractérisé en ce que** la pierre de nettoyage présente une porosité avec une proportion de surface de pores se situant dans un intervalle entre 70 et 90 %.

7. Dispositif de laminage (100) selon l'une des revendications 4 à 6, **caractérisé en ce que** la pierre de nettoyage présente les caractéristiques mécaniques suivantes : mₑ dans un intervalle entre 125 et 175 MPa et/ou R_{d}(50 %) dans un intervalle entre 50 et 70 MPa.

8. Dispositif de laminage (100) selon l'une des revendications 1 à 7, **caractérisé en ce que** le dispositif de laminage (100) présente un dispositif de transport à entraînement hydraulique (114a-d), où l'on prévoit de préférence une huile de laminage utilisée lors du laminage en tant que liquide hydraulique.

9. Dispositif de laminage selon l'une des revendications 1 à 8, **caractérisé en ce que** le dispositif de laminage présente un dispositif de surveillance qui est mis en place pour surveiller le mouvement du dispositif de transport et/ou de l'outil de conditionnement, et le dispositif de surveillance et le dispositif de transport sont mis en place de telle sorte que l'outil de conditionnement, lors d'une défaillance du mouvement du dispositif de transport et/ou de l'outil de conditionnement, est écarté de la surface du cylindre.

10. Procédé de conditionnement de la surface d'un cylindre, de préférence d'un cylindre d'un laminoir à froid quarto pour la production de feuilles d'aluminium, en particulier d'un cylindre d'une cage de laminoir d'un dispositif de laminage selon l'une des revendications 1 à 9,
- selon lequel un encrassement, en particulier un dépôt, est éliminé mécaniquement de la surface (202) d'un cylindre (104a-b, 106a-b) à l'aide d'un outil de conditionnement (112a-d),
- selon lequel l'outil de conditionnement (112a-d), pendant l'élimination de l'encrassement, est déplacé sensiblement dans le sens longitudinal du cylindre au-dessus de la surface (202) du cylindre (104a-b, 106a-b) et
- selon lequel l'élimination de l'encrassement est effectuée pendant l'opération de laminage du cylindre (104a-b, 106a-b),
- où l'outil de conditionnement (112a-d) présente une section cunéiforme avec une surface de coupe, une surface libre et un bord coupant pour l'élimination de l'encrassement de la surface du cylindre,
- où le bord de coupe passe sensiblement dans le sens longitudinal du cylindre avec un écart par rapport su sens longitudinal allant jusqu'à un maximum de 20° et
- où l'angle de coupe entre la surface de coupe et le plan passant à travers le bord coupant perpendiculairement par rapport à la surface du cylindre est négatif et se situe dans un intervalle entre -5° et -45°.

11. Procédé selon la revendication 10, **caractérisé en ce que** l'outil de conditionnement (112a-d) est conçu conformément à l'outil de conditionnement d'un dispositif de laminage selon l'une des revendications 2 à 7.

12. Procédé selon la revendication 10 ou 11, **caractérisé en ce que** la vitesse avec laquelle l'outil de conditionnement (112a-d) est déplacé sensiblement dans le sens longitudinal au-dessus de la surface (202) du cylindre (104a-b, 106a-b) se situe dans un intervalle entre 0,001 et 0,015 fois la vitesse périphérique du cylindre.

13. Procédé selon l'une des revendications 10 à 12, **caractérisé en ce que** l'outil de conditionnement (112a-d) est déplacé dans un mouvement traversant continu au-dessus de la surface (202) du cylindre (104a-b, 106a-b).

14. Procédé selon l'une des revendications 10 à 13, **caractérisé en ce que** l'outil de conditionnement (112a-d) est pressé contre la surface (202) du cylindre (104a-b, 106a-b) avec une pression comprise entre 0,1 et 2,5 MPa.

15. Procédé selon l'une des revendications 10 à 14, **caractérisé en ce que** l'outil de conditionnement (112a-d) est régénéré au moins une fois, de préférence à plusieurs reprises, à des intervalles prédéterminés, en particulier par voie de nettoyage, refroidissement et/ou de temps de repos de l'outil de conditionnement.
